# NEUE EUROPÄISCHE PATENTSCHRIFT

(11) **EP 3 390 164 B2**
(45) Veröffentlichungstag und Bekanntmachung des Hinweises auf die Entscheidung über den Einspruch: **30.11.2022**
(45) Hinweis auf die Patenterteilung: 27.11.2019
(21) Anmeldenummer: 16822938.3
(22) Anmeldetag: 16.12.2016
(51) Int. Cl.: B60R 21/207, B60R 21/231, B60R 21/2338, B60R 21/00

(54) **AIRBAGVORRICHTUNG FÜR EIN KRAFTFAHRZEUG, SOWIE AIRBAGKISSEN FÜR EINE AIRBAGVORRICHTUNG**
AIRBAG DEVICE FOR A MOTOR VEHICLE, AND AIRBAG CUSHION FOR AN AIRBAG DEVICE
SYSTÈME DE COUSSIN GONFLABLE DE SÉCURITÉ POUR VÉHICULE À MOTEUR, ET COUSSIN GONFLABLE POUR SYSTÈME DE COUSSIN GONFLABLE DE SÉCURITÉ

(30) Priorität: 17.12.2015 DE 102015016346
(43) Veröffentlichungstag der Anmeldung: 24.10.2018
(73) Patentinhaber: Autoliv Development AB, 447 83 Vårgårda (SE)
(72) Erfinder: BERNTSSON, Mats, 44158 Alingsas (SE); SANDINGE, Pär, 44195 Alingsås (SE); LARSSON, Patrik, 44734 Vårgårda (SE)
(74) Vertreter: Schön, Thilo
(86) Internationale Anmeldenummer: PCT/EP2016/081389
(87) Internationale Veröffentlichungsnummer: WO 2017/103076

(56) Entgegenhaltungen:
- EP-A1- 2 979 933
- WO-A1-2015/168401
- DE-A1- 10 032 106
- DE-A1-102012 216 896
- US-A1- 2006 119 083
- US-A1- 2014 062 069

## Beschreibung

Die vorliegende Erfindung betrifft eine Airbagvorrichtung für ein Kraftfahrzeug, die an einem Sitzrahmen angeordnet und befestigt werden kann, und die ausgebildet ist, den Kopf und den Brustkorb eines Insassen im Falle eines Seitenaufpralls oder Fahrzeugüberschlags zu schützen.

Airbagvorrichtungen für Kraftfahrzeuge werden mittlerweile vielseitig in modernen Kraftfahrzeugen als zusätzliche Schutzsysteme verwendet. Beispielsweise werden Airbagvorrichtungen als Schutzsystem für den Fahrer eines Kraftfahrzeuges verwendet, und sind hierzu vorzugsweise im Lenkrad direkt vor dem Fahrer des Kraftfahrzeuges angeordnet. Weiterhin werden Airbagvorrichtungen auch als Schutzsystem für den Beifahrer verwendet, und sind hier vorzugsweise im Armaturenbrett vor dem Beifahrersitz im Bereich des Handschuhfaches angeordnet. Auch ist es bekannt, Airbagvorrichtungen im unteren Bereich des Armaturenbrettes vor dem Fahrersitz sowie dem Beifahrersitz anzubringen, die die Knie sowie die unteren Beine des Fahrers und Beifahrers im Falle eines Unfalles schützen.

Als weitere ergänzende Schutzsysteme werden Airbagvorrichtungen auch zum Seitenschutz von Insassen eines Kraftfahrzeuges verwendet. Hierzu werden Airbagvorrichtungen beispielsweise im nach außen weisenden Seitenbereich der Lehne des Fahrersitzes bzw. des Beifahrersitzes angebracht, oder sie werden im Dachbereich des Innenraums über den Seitenfenstern angeordnet, um im Falle eines Unfalles mit einem als Gardine aufgeblasenen Airbagkissen die Insassen des Kraftfahrzeuges zu schützen.

Diese bekannten Airbagvorrichtungen gibt es in verschiedenen Größen und Ausführungsformen, die an den jeweiligen geplanten Anbringungsort bzw. Verwendungszweck im Innenraum des Fahrzeuges angepasst sind.

So ist beispielsweise aus der DE 10 2009 044 734 eine Airbagvorrichtung zum Seitenschutz von Insassen eines Kraftfahrzeugs bekannt, die an einem vorbestimmten Abschnitt des Sitzrahmens angebracht ist. Diese bekannte Airbagvorrichtung weist ein Airbagmodul, sowie ein in dem Airbagmodul zusammengefaltet angeordnetes Airbagkissen auf. Das Airbagmodul ist mittels Bolzen an dem Sitzrahmen befestigt und weist weiterhin einen Bügel auf, der mit einem ersten Ende an einem vorbestimmten Abschnitt des Airbagkissen gekoppelt ist, und mit einem zweiten Ende an den Bolzen. Mit dem Bügel soll es ermöglicht werden, dass das Airbagkissen mit einer vorbestimmten Länge in eine vorbestimmte Position entfaltet wird, wenn das Airbagkissen aufgeblasen wird. WO 2015/ 168401 A1 offenbart eine Airbagvorrichtung gemäß dem Oberbegriff des Anspruchs 1.

In den letzten Jahren haben sich jedoch die Anforderungen an die Sicherheitssysteme in Kraftfahrzeugen wesentlich erhöht, nicht zuletzt durch die schärferen Sicherheitsvorschriften der für die Kraftfahrzeugsicherheit zuständigen Behörden. Um eine höchste Bewertung für ein Kraftfahrzeug durch die für die Kraftfahrzeugsicherheit zuständigen Behörden zu erzielen, ist es nunmehr erforderlich, Kraftfahrzeuge mit einem so genannten "FCA" (Front Center Airbag) auszustatten. Dieser FCA ist in der Mitte des Fahrzeuges zwischen dem Fahrersitz und einem Sitz eines Passagiers angeordnet, vorzugsweise im zum benachbarten Sitz weisenden Seitenbereich der Lehne des Fahrersitzes oder Beifahrersitzes, und schützt bei einem Seitenaufprall die Flanke oder den Kopf einer Person in diesen Sitzen, wenn das Airbagkissen entfaltet ist.

Aufgrund der gegebenen Geometrie der Sitze, und der sich daraus ergebenden Begrenzung des Einbauraums, ist im oberen Seitenbereich des Sitzes sowie in der Kopfstütze kein ausreichender Einbauraum für ein Airbagmodul für einen FCA vorhanden. Airbagmodule für einen FCA können daher nur in dem unteren Seitenbereich der Rückenlehne störungsfrei untergebracht werden, da nur hier ein ausreichender Einbauraum vorhanden ist.

Die Anordnung des Airbagmoduls im unteren Seitenbereich der Rückenlehne führt jedoch eine Reihe von Nachteilen mit sich.

Herkömmliche Airbagmoduls sind üblicherweise symmetrisch aufgebaut, was bedeutet, dass der Gasgenerator in der Mitte angeordnet ist, und das Airbagkissen symmetrisch zur Mitte hin gefaltet ist. Bei der Auslösung des Airbagmoduls wird somit auch das Airbagkissen symmetrisch aufgeblasen, das heißt das Airbagkissen entfaltet sich zu gleichen Teilen oberhalb und unterhalb des Gasgenerators, was ein stabiles Positionierverhalten des Airbagkissen mit sich führt. Wird nun ein herkömmliches Airbagmodul mit einem herkömmlichen Airbagkissen für einen FCA verwendet, so muss ein extra großes Airbagkissen verwendet werden, dass im entfalteten bzw. aufgeblasenen Zustand von der Einbauposition des Airbagmoduls im unteren Seitenbereich der Lehne bis über die Kopfstütze des Sitzes nach oben reichen muss, um den Kopf einer Person zu schützen.

Zum einen benötigt dieses extra große Airbagkissen auch im gefalteten Zustand ein großes Volumen. Das Volumen zum Einbau von Modulen im unteren Seitenbereich der Rückenlehne ist jedoch begrenzt, so dass sich beim Einbau eines extra großen Airbagkissen aufgrund des erhöhten Volumens des extra großen Airbagkissens Funktionsprobleme ergeben.

Zum anderen wird ein ebenso großer Teil des extra grossen Airbagkissens nach unten hin entfaltet und aufgeblasen, da das Airbagkissen hier symmetrisch zum Gasgenerator hin gefaltet ist. Nach unten hin ist jedoch der Raum zwischen den beiden Sitzen durch den Getriebetunnel bzw. die Mittelkonsole begrenzt, so dass sich der untere Teil des extra großen Airbagkissen nicht richtig entfalten kann. Dadurch wird jedoch auch die Entfaltung des oberen Teils des extra großen Airbagkissens, sowie dessen Positionierung bezüglich des Kopfes, beeinflusst, so dass die sichere Funktionsweise hier nicht gewährleistet werden kann.

Zur Vermeidung des letztgenannten Nachteils ist es bekannt, Airbagkissen so zu falten und am Gasgenerator anzubringen, dass sie sich im wesentlichen vom Gasgenerator nach oben hin unsymmetrisch entfalten, wenn der Gasgenerator ausgelöst wird und das Airbagkissen aufbläst.
Damit kann zwar zum einen ein kleineres Airbagkissen verwendet werden, welches ein kleineres Volumen im gefalteten Zustand benötigt, und die Airbagvorrichtung kann im unteren Seitenbereich der Rückenlehne des Sitzes angebracht werden, wo es ein ausreichendes Volumen zum unterbringen der Airbagvorrichtung gibt. Weiterhin wird eine Beeinflussung des aufgeblasenen Airbagkissens durch die Mittelkonsole bzw. den Getriebetunnel vermieden.
Zum anderen hat das Airbagkissen hier jedoch ein instabiles Positionierverhalten, da die Entfernung vom Befestigungspunkt des Airbagkissens am Sitzrahmen bis zum Kopfbereich des Airbagkissens gross ist und das Airbagkissen unsymmetrisch aufgeblasen wird, so dass eine Verdrehung bzw. Verschiebung des Kopfbereichs des Airbagkissens bezüglich der geplanten Anwendungsposition möglich ist. Insbesondere ist es möglich, da das Airbagkissen in der Längsrichtung des Fahrzeuges nach oben und vorne hin entfaltet wird (d.h. unsymmetrisch bezüglich des Gasgenerators), dass das Airbagkissen eine nach rückwärts gerichtete Verdrehung erfährt, die den Kopfbereich des Airbagkissens aus der geplanten Anwendungsposition führt. Damit besteht jedoch die Gefahr, dass die Passagiere auf den Vordersitzen im Falle eines Seitenaufpralls oder Fahrzeugüberschlags mit den Köpfen zusammenstossen können. Die nach rückwärts gerichtete Verdrehung des Airbagkissens ist im wesentlichen auf die explosionsartige schnelle Aufblasung des Airbagkissens, und die nachfolgende Entleerung nach der vollständigen Aufblasung, zurückzuführen.

Vor diesem Hintergrund ist es daher Aufgabe der vorliegenden Erfindung, eine einfache, kostengünstige und funktionssichere Airbagvorrichtung für ein Kraftfahrzeug zur Verfügung zu stellen, die den Kopf und den Brustkorb eines Insassen im Falle eines Seitenaufpralls oder Fahrzeugüberschlags zuverlässig schützt. Weiterhin ist es Aufgabe der vorliegende Erfindung, ein Airbagkissen für ein Kraftfahrzeug zur Verfügung zu stellen, das den Kopf und den Brustkorb eines Insassen im Falle eines Seitenaufpralls oder Fahrzeugüberschlags zuverlässig schützt.

Gelöst wird diese Aufgabe durch eine Airbagvorrichtung gemäß Anspruch 1. Weitere vorteilhafte Ausgestaltungen der Erfindung sind Gegenstand der Unteransprüche.

Die erfindungsgemäße Airbagvorrichtung für ein Kraftfahrzeug kann an einem Sitzrahmen angeordnet und befestigt werden und ist ausgebildet, den Kopf und den Brustkorb eines Insassen im Falle eines Seitenaufpralls oder Fahrzeugüberschlags zu schützen. Sie weist einen innerhalb des Airbagkissens angeordneten Gasgenerator, ein Airbagkissen, eine Befestigungsanordnung sowie ein als Riemen ausgebildetes Zugelement auf. Die Befestigungsanordnung verbindet den Gasgenerator und das Airbagkissen miteinander, um die Airbagvorrichtung am Sitzrahmen zu befestigen. Das Zugelement ist mit einem ersten Ende an einem vorbestimmten Abschnitt des Airbagkissens angebracht, und kann mit einem zweiten Ende an der Befestigungsanordnung angebracht werden. Erfindungsgemäß und vorteilhafterweise ist das Zugelement mit dem ersten Ende am unteren Rand des Airbagkissens angebracht.

Durch diese erfindungsgemäße und vorteilhafte Ausgestaltung wird ein zusätzlicher Befestigungspunkt für das Airbagkissen zur Verfügung gestellt, der die Stabilität und die Positionierungsgenauigkeit des Airbagkissens deutlich erhöht. Insbesondere wird damit erreicht, dass der Kopfbereich des Airbagkissen zuverlässig im vorgesehenen Entfaltungsbereich neben der Kopfstütze des Sitzes positioniert wird, und damit die Funktionsfähigkeit der erfindungsgemäßen Airbagvorrichtung gewährleistet. Ein Zusammenstossen der Köpfe von auf den Vordersitzen sitzenden Passagieren kann damit zuverlässig vermieden werden, so dass die Insassen auch im Falle eines Seitenaufpralls oder Fahrzeugüberschlags zuverlässig geschützt werden. Die Befestigungsanordnung weist Befestigungsbolzen auf, mittels denen die Airbagvorrichtung an dem Sitzrahmen angeordnet und befestigt werden kann, wobei der Riemen eine erste Befestigungsausnehmung am zweiten Ende aufweist, die ausgebildet ist, um an einem Befestigungsbolzen angebracht zu werden.

Das Zugelement ist am unteren Rand des Airbagkissens angebracht, sodass bei der Aufblasung des Airbagkissens eine nach unten gerichtete Kraft erzeugt wird, die das Airbagkissens nach unten zieht und so eine nach rückwärts gerichtete Verdrehung des Airbagkissens verhindert. Dieses gewährleistet die genaue und funktionssichere Positionierung des Kopfbereiches des Airbagkissens im vorgesehenen Entfaltungsbereich neben der Kopfstütze des Sitzes.

Um ein zeitiges Eingreifen bzw. Erzeugen der nach unten gerichteten Kraft zu erzielen, und damit jeden Ansatz einer nach rückwärts gerichteten Verdrehung des Airbagkissens zu vermeiden, ist das Zugelement vorteilhafterweise und erfindungsgemäß kurz ausgeführt. Damit verbleibt das untere Ende des Airbags auch beim aufblasen des Airbags in der Nähe des Gasgenerators.

Erfindungsgemäß weist die Befestigungsanordnung Befestigungsbolzen auf, die sich vom Gasgenerator erstrecken, mittels denen die Airbagvorrichtung am Sitzrahmen angeordnet und befestigt werden kann. Damit wird es erfindungsgemäß und vorteilhafterweise einfach ermöglicht, die Airbagvorrichtung funktionssicher in dafür am Sitzrahmen vorgesehene Ausnehmungen einzuführen und dort zu befestigen, was zu einer schnellen und damit kostengünstigen Montage beiträgt.

Die Befestigungsbolzen können dabei gemäß einer weiteren bevorzugten Ausführungsform direkt am Gasgenerator angeordnet sein, welches die Konstruktion und damit die Herstellung der Airbagvorrichtung weiter vereinfacht und kostengünstiger macht.

Die Befestigungsbolzen können aber auch an einer Befestigungshülse angeordnet sein, wobei dann der Gasgenerator zur Bildung der Airbagvorrichtung innerhalb der Befestigungshülse angeordnet wird. Dem Fachmann sind weitere Möglichkeiten zur Befestigung der Airbagvorrichtung am Sitzrahmen mittels Befestigungsbolzen bekannt, die hiermit in die Offenbarung und den Umfang der Erfindung mit einbezogen werden.

Durch diese erfindungsgemäße und vorteilhafte Ausgestaltung des Zugelementes als Riemen kann das Zugelement einfach zusammen mit dem Airbagkissen gefaltet werden, so dass das Volumen der Airbagvorrichtung insgesamt weiter verringert wird. Damit wird jedoch auch der benötigte Einbauraum für das Airbagkissen im Seitenbereich des Sitzes verringert, so dass die Polsterung und folglich der Komfort des Sitzes verbessert werden kann.

Weiterhin ist die erste Befestigungsausnehmungen als ein Befestigungsloch ausgebildet, dessen Durchmesser so mit dem Durchmesser des Befestigungsbolzen abgestimmt ist, dass es auf den Befestigungsbolzen aufgeschoben werden kann um den Riemen daran anzubringen und zu befestigen. Dieses ermöglicht eine schnelle und einfache Montage des Riemens auf dem Befestigungsbolzen, was insgesamt die Montage der Airbagvorrichtung erleichtert.

Dieses erleichtert und vereinfacht die Montage der Airbagvorrichtung wesentlich, insbesondere wenn gemäß einer weiteren vorteilhaften Ausführungsform die Befestigungsbolzen direkt am Gasgenerator angeordnet sind. Das Airbagkissen weist hierbei vorteilhafterweise eine integrierte Tasche auf, in welche der Gasgenerator eingeführt wird, und von welcher aus das Airbagkissens aufgeblasen wird, wenn der Gasgenerator ausgelöst wird. Diese integrierte Tasche weist die zweiten Befestigungsausnehmungen auf, die erfindungsgemäß und vorteilhafterweise jeweils als ein Befestigungsloch ausgebildet sind, dessen Durchmesser so mit dem Durchmesser des Befestigungsbolzen abgestimmt ist, dass es vorzugsweise dichtend auf einen Befestigungsbolzen aufgeschoben werden kann.

Als besonders vorteilhaft ist hier anzusehen, dass die Airbagvorrichtung nur wenige Bauteile aufweist, die auf einfache Weise miteinander verbunden werden können, und dass die Airbagvorrichtung schnell und einfach an einem Sitzrahmen angebracht und mit diesem fest verbunden werden kann. Dieses vereinfacht und erleichtert den Zusammenbau sowie den Einbau der Airbagvorrichtung, und reduziert zudem die Kosten.

Gemäß einer weiteren bevorzugten Ausführungsform ist die Airbagvorrichtung an der Seite des Sitzrahmens angeordnet, die zum benachbarten Sitz gerichtet ist. Damit wird eine einfache und funktionssichere Airbagvorrichtung mit einem FCA zur Verfügung gestellt, die in der Mitte des Fahrzeugs angeordnet ist und die Insassen auf den Sitzen im Wirkbereich des FCA im Falle einer Seitenkollision oder eines Fahrzeugüberschlags wirksam schützt.

Gemäß einer weiteren bevorzugten Ausführungsform ist der größte Teil des Airbagkissens nach dem auslösen des Airbags oberhalb der Airbagvorrichtung angeordnet. Damit wird vorteilhafterweise eine Airbagvorrichtung für ein Kraftfahrzeug zur Verfügung gestellt, die sowohl den Kopf als auch den Brustkorb eines Insassen im Falle eines Seitenaufpralls oder Fahrzeugüberschlags zuverlässig schützt.

Das erfindungsgemäße Airbagkissen für eine Airbagvorrichtung für ein Kraftfahrzeug kann an einem Sitzrahmen angeordnet und befestigt werden und ist ausgebildet, den Kopf und den Brustkorb eines Insassen im Falle eines Seitenaufpralls oder Fahrzeugüberschlags zu schützen. Die Airbagvorrichtung weist neben dem Airbagkissen einen Gasgenerator, eine Befestigungsanordnung sowie ein Zugelement auf, wobei die Befestigungsanordnung den Gasgenerator und das Airbagkissen miteinander verbindet, um die Airbagvorrichtung am Sitzrahmen zu befestigen. Das Zugelement ist mit einem ersten Ende an einem vorbestimmten Abschnitt des Airbagkissens angebracht, und kann mit einem zweiten Ende an der Befestigungsanordnung angebracht werden. Erfindungsgemäß und vorteilhafterweise ist das Zugelement mit dem ersten Ende am unteren Rand des Airbagkissens angebracht.

Weitere Vorteile und Merkmale der Erfindung sind aus der nachfolgenden Beschreibung im Zusammenhang mit den Zeichnungen ersichtlich. In den Zeichnungen zeigt:
Fig. 1: eine Teilansicht des Fahrersitzes (60) eines Kraftfahrzeuges von hinten im Aufriss, mit einer am Sitzrahmen (64) angeordneten Airbagvorrichtung (10);
Fig. 2: einen Schnitt durch den Sitzrahmen (64) der Fig.1 entlang der Linie A-A;
Fig. 3: eine Ansicht eines Airbagkissens (30) mit Riemen (50);
Fig. 4: eine vergrösserte Ansicht des Details Y der Fig.3 ;
Fig. 5: eine schematische Darstellung der Wirkungsweise der Airbagvorrichtung (10);
Fig. 6: eine schematische Darstellung der Wirkungsweise der Airbagvorrichtung (10);

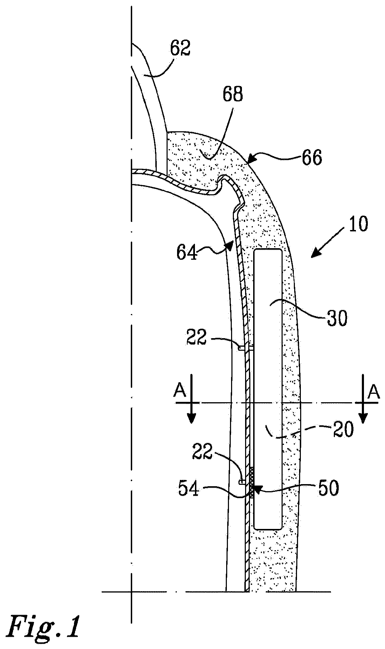

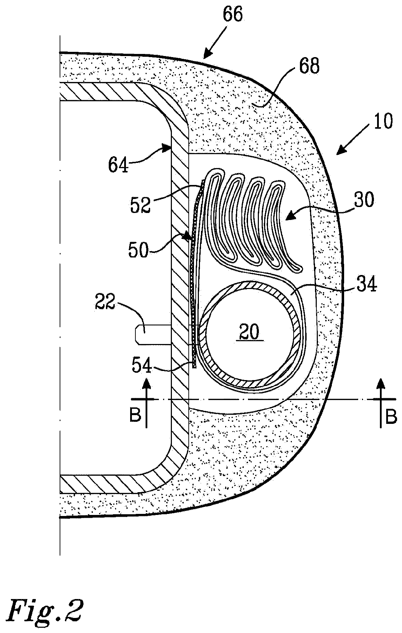

Die Fig. 1 zeigt eine Teilansicht im Aufriss des Fahrersitzes (60) eines Kraftfahrzeugs von hinten, mit einer am Sitzrahmen (64) angeordneten Airbagvorrichtung (10). Diese Teilansicht ist ein Schnitt entlang der Linie B-B in der Fig. 2. Dargestellt ist hier zur Vereinfachung nur der Teil des Sitzrahmens (64), an dem die Airbagvorrichtung (10) angeordnet ist. Am oberen Ende des Sitzrahmen (64) ist eine Kopfstütze (62) angeordnet, und an der nach außen weisenden Seite des Sitzrahmens (64) ist eine Polsterung (68) angebracht, die mit einem Bezug (66) bezogen ist.

Die Airbagvorrichtung (10) ist mittels zweier Bolzen (22) am Sitzrahmen (64) angeordnet und befestigt, und weist neben den zwei Bolzen (22) ein Airbagkissen (30) sowie einen Gasgenerator (20) auf. Der Gasgenerator (20) ist innerhalb des Airbagkissens (30) angeordnet, so dass in dieser Darstellung nur die Außenseite des den Gasgenerator (20) umgebenden Airbagkissens (30) zu sehen ist.

Gut zu sehen ist in der Fig. 1 der am unteren Befestigungsbolzen (22) angebrachte Riemen (50), der dort mit seinem zweiten Ende (54) befestigt ist. Durch den hier befestigten Riemen (50) wird bei der Aufblasung des Airbagkissens (30) eine nach unten gerichtete Kraft erzeugt, die das Airbagkissen (30) nach unten zieht und so eine nach rückwärts gerichtete Verdrehung des Airbagkissens (30) verhindert. Dieses gewährleistet die genaue und funktionssichere Positionierung des Kopfbereiches des Airbagkissens (30) im vorgesehenen Entfaltungsbereich neben der Kopfstütze (62) des Sitzes.
Weiterhin ist hier gut zu erkennen, dass die Airbagvorrichtung (10) innerhalb der Polsterung (68) angeordnet und von dieser umgeben ist, so dass die Airbagvorrichtung (10) nicht von der Polsterung (68) hervorsteht und damit der Sitzkomfort durch die Airbagvorrichtung (10) nicht beeinträchtigt wird.

Die Airbagvorrichtung (10) kann in einer Ausnehmung der Polsterung (68) angeordnet werden, wie nachfolgend unter Bezugnahme auf die Fig. 2 beschrieben, sie kann aber auch eine separate Umhüllung oder Abdeckung aufweisen (hier nicht dargestellt) und mit dieser in der Polsterung (68) integriert werden. Es gibt viele verschiedene Möglichkeiten, die Airbagvorrichtung (10) in der Polsterung (68) anzuordnen, die dem Fachmann bekannt sind, so dass an dieser Stelle darauf nicht weiter eingegangen werden muss.

In der Fig. 2 ist ein Schnitt durch den Sitzrahmen (64) der Fig. 1 entlang der Linie A-A dargestellt. Der Sitzrahmen (64) weist an seiner Außenseite, also an der Seite die zum benachbarten Sitz zeigt, eine Polsterung (68) auf, in welcher in einer Ausnehmung die Airbagvorrichtung (10) angeordnet ist, und die mit einem Bezug (66) versehen ist. Die Airbagvorrichtung (10) weist einen Gasgenerator (20), ein Airbagkissens (30) sowie eine Befestigungsanordnung in Form von Befestigungsbolzen (22) auf.

Die Befestigungsbolzen (22) sind am Gasgenerator (20) angeordnet, und der Gasgenerator (20) ist innerhalb einer Kammer (34) des Airbagkissens (30) angeordnet. Mit den Befestigungsbolzen (22) ist der Gasgenerator (20), und damit die gesamte Airbagvorrichtung (10), am Sitzrahmen (64) angeordnet und befestigt. Als besonders vorteilhaft ist hier anzusehen, dass die Airbagvorrichtung (10) nur wenige Bauteile aufweist, die auf einfache Weise miteinander verbunden werden können, und dass die Airbagvorrichtung (10) schnell und einfach an dem Sitzrahmen (64) angebracht und mit diesem fest verbunden werden kann. Dieses vereinfacht und erleichtert den Zusammenbau sowie den Einbau der Airbagvorrichtung (10), und reduziert zudem die Kosten.

Gut zu erkennen ist hier der Riemen (50), der mit einem zweiten Ende (54) an dem Befestigungsbolzen (22) angebracht ist, und mit einem ersten Ende (52) an dem unteren Rand des Airbagkissens (30).

Ebenfalls gut zu erkennen ist hier, dass die Faltung des Airbagkissens (30) vor dem Gasgenerator (20) nach vorne in Fahrtrichtung (in Fig. 2 nach oben) weisend angeordnet ist. Damit kann sich das Airbagkissen (30) nach der Auslösung des Gasgenerator (20) einfach nach vorne und oben entfalten und so unbehindert die Funktion eines FCA erfüllen.

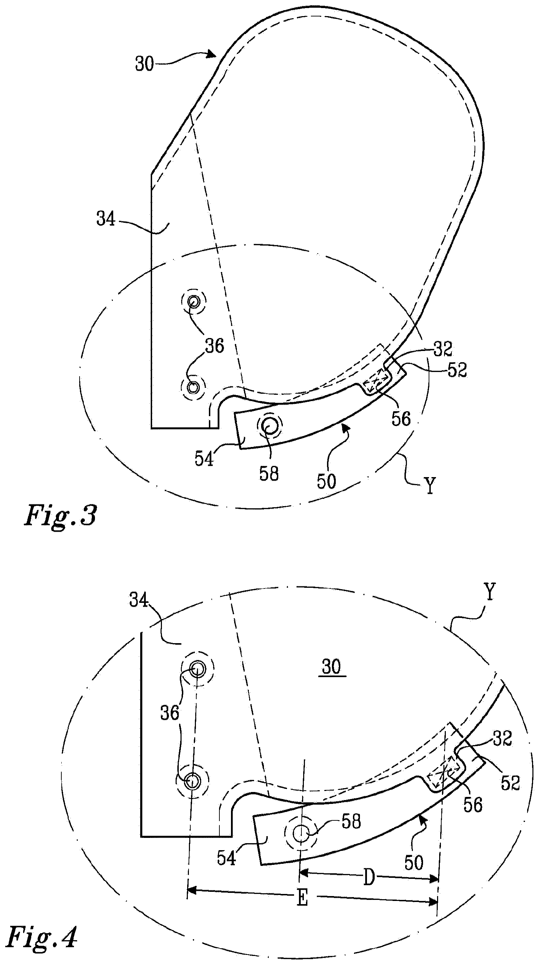

Die Fig. 3 zeigt eine Ansicht eines Airbagkissens (30) mitt einem Riemen (50). Das Airbagkissens (30) hat eine integrierte Kammer (34), in welcher ein Gasgenerator (nicht dargestellt) angeordnet werden kann, und die zwei als Befestigungslöcher (36) ausgebildete zweite Befestigungsausnehmungen aufweist. Am unteren Rand (32) des Airbagkissens (30) ist eine Riemen (50) an einem Anbringungspunkt (56) angebracht.

Der Riemen (50) ist hier ein separates Bauteil, und ist mit seinem ersten Ende (52) mit seinem Anbringungspunkt (56) am unteren Rand (32) des Airbagkissens (30) angebracht. An seinem zweiten Ende (54) weist der Riemen (50) eine erste Befestigungsausnehmung (58) auf, die als Befestigungsloch (58) ausgebildet ist und in ihren Abmessungen mit den zweiten Befestigungsausnehmungen bzw. Befestigungslöchern (36) des Airbagkissens (30) übereinstimmt.

Die Abmessungen der Befestigungslöcher (36) und (58) sind hierbei so gewählt, dass sie mit den Abmessungen von hier nicht dargestellten Befestigungsbolzen übereinstimmen, so dass die Befestigungslöcher (36) und (58) zur Befestigung des Airbagkissens (30) mit dem nicht dargestellten Befestigungsbolzen zusammenwirken können.

Die Fig. 4 zeigt eine vergrößerte Ansicht des Details Y der Fig. 3. Der Riemen (50) ist mit seinem ersten Ende (52) mit seinem Anbringungspunkt (56) am unteren Rand (32) des Airbagkissens (30) durch vernähen angebracht.

Die Abmessungen des Riemens (50) sowie die Anordnung des Anbringungspunkts (56) und dessen Anbringung am unteren Rand (32) des Airbagkissens (30) sind dabei so gewählt, dass der Abstand D zwischen dem Anbringungspunkt (56) am ersten Ende (52) des Riemens (50) und dem ersten Befestigungsloch (58) am zweiten Ende (54) des Riemens (50) kleiner ist als der Abstand E zwischen dem Anbringungspunkt (56) am ersten Ende (52) des Riemens (50) und den zweiten Befestigungslöcher (36) in der Kammer (34) des Airbagkissens (30).

Zum Zusammenbau der Airbagvorrichtung (10) wird zunächst ein Gasgenerator (20) (hier nicht dargestellt) in die Kammer (34) des Airbagkissens (30) eingeführt, wobei die am Gasgenerator (20) angeordneten Befestigungsbolzen (22) durch die zweiten Befestigungslöcher (36) aus der Kammer (34) herausgeführt werden. Anschließend wird der Riemen (50) mit seinem ersten Befestigungsloch (58) am unteren Befestigungsbolzen (22), der aus dem unteren zweiten Befestigungsloch (36) hervorsteht, befestigt. Abschließend wird das Airbagkissen (30) in der oben beschriebenen und dargestellten Weise zusammengefaltet, bevor die derart zusammengebaute Airbagvorrichtung (10) in der ebenfalls oben beschriebenen und dargestellten Weise an einem Sitzrahmen (64) (hier nicht dargestellt) angeordnet und befestigt wird.

Durch diese erfindungsgemäße und vorteilhafte Ausgestaltung wird ein zusätzlicher Befestigungspunkt für das Airbagkissen (30) zur Verfügung gestellt, der die Stabilität und die Positionierungsgenauigkeit des Airbagkissens (30) deutlich erhöht. Insbesondere wird damit erreicht, dass der Kopfbereich des Airbagkissen (30) zuverlässig im vorgesehenen Entfaltungsbereich neben der Kopfstütze (62) des Sitzes positioniert wird, und damit die Funktionsfähigkeit der erfindungsgemäßen Airbagvorrichtung (10) gewährleistet.

Als besonders vorteilhaft ist hier anzusehen, dass durch diese erfindungsgemäße und vorteilhafte Ausgestaltung des Airbagkissens (30) bei der Aufblasung des Airbagkissens (30) eine nach unten gerichtete Kraft erzeugt wird, die das Airbagkissens (30) nach unten zieht und so eine nach rückwärts gerichtete Verdrehung des Airbagkissens (30) verhindert. Dieses gewährleistet die genaue und funktionssichere Positionierung des Kopfbereiches des Airbagkissens (30) im vorgesehenen Entfaltungsbereich neben der Kopfstütze (62) des Sitzes.

Ein weiterer Vorteil dieser erfindungsgemäßen und vorteilhaften Ausgestaltung des Airbagkissens (30) ist dass hierdurch erzielte zeitige Eingreifen bzw. Erzeugen der nach unten gerichteten Kraft. Damit wird jeder Ansatz einer nach rückwärts gerichteten Verdrehung des Airbagkissens (30) vermieden. Zudem ist der Riemen (50) vorteilhafterweise und erfindungsgemäß kurz ausgeführt, so dass das untere Ende des Airbags (30) auch beim Aufblasen des Airbags (30) in der Nähe des Gasgenerators (20) verbleibt.

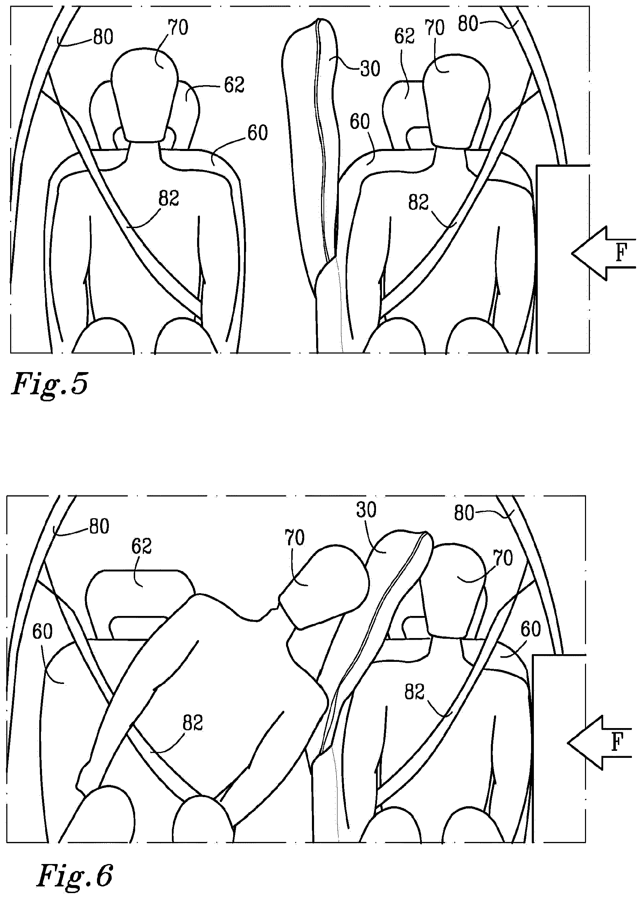

Die Wirkungsweise der Airbagvorrichtung (10) wird nun schematisch unter Bezugnahme auf die Fig. 5 und die Fig. 6 dargestellt.

Die Fig. 5 zeigt in einer Ansicht von vorne schematisch die Karosserie (80) eines Kraftfahrzeugs. In der Karosserie (80) sind zwei Sitze (60) nebeneinander angeordnet, die einen Fahrersitz bzw. Beifahrersitz darstellen. Auf jedem Sitz (60) ist eine Autocrashpuppe (70) angeordnet, die mittels an der Karosserie (80) befestigten Sicherheitsgurten (82) so auf dem Sitz (60) festgehalten werden, dass die Köpfe der Autocrashpuppen (70) an die Kopfstützen (62) der Sitze (60) anstoßen.

In dieser Testanordnung wird nun ein Seitenaufprall simuliert, indem eine seitliche Kraft F auf die Karosserie (80) aufgebracht wird.

Dargestellt ist in der Fig. 5 der Moment direkt nach Aufbringung der Seitenkraft F. Der Seitenaufprall hat die Airbagvorrichtung (10) (hier nicht dargestellt) ausgelöst, so dass der hier ebenfalls nicht dargestellte Gasgenerator (20) aktiviert wurde und den FCA bzw. das Airbagkissen (30) voll aufgeblasen hat. Der Beifahrer bzw. die Autocrashpuppe (70) (links in der Fig. 5 ) ist von dem Seitenaufprall noch unbeeinflusst und sitzt unverändert auf ihrem Stuhl (60) und wird von dem Sicherheitsgurt (82) auf dem Stuhl (60) so gehalten, dass der Kopf an der Kopfstütze (62) anliegt.

Der Fahrer bzw. die Autocrashpuppe (70) (rechts in der Fig. 5 ) hingegen hat schon eine durch den Seitenaufprall ausgelöste Bewegung nach rechts in die Gegenrichtung des Seitenaufpralls begonnen, wird aber durch den Sicherheitsgurt (82) auf dem Sitz (60) festgehalten.

Das Airbagkissen (30) befindet sich voll aufgeblasen zwischen den beiden Insassen bzw. Autocrashpuppen (70) und erstreckt sich in Richtung auf das Karosseriedach über die Kopfhöhe der Autocrashpuppen (70). Wie hier gut zu erkennen ist, befindet sich das Airbagkissens (30) mit seinem Kopfbereich im vorgesehenen Entfaltungsbereich zwischen den beiden Sitzen, wobei es sich über die Kopfhöhe hinaus in Richtung auf das Fahrzeuginnendach hin erstreckt. Dieses gewährleistet die sichere Funktion des FCA bei einem Seitenaufprall, wie nachfolgend unter Bezugnahme auf die Fig. 6 deutlich werden wird.

In der Fig. 6 ist ein Moment im weiteren Verlauf des Seitenaufpralls dargestellt, in dem der Beifahrer bzw. die linke Autocrashpuppe (70) ebenfalls eine durch den Seitenaufprall ausgelöste Bewegung nach rechts in die Gegenrichtung des Seitenaufpralls durchgeführt hat und durch das Airbagkissens (30) gestoppt wurde. Der Sicherheitsgurt (82) kann diese seitliche Bewegung der Autocrashpuppe (70) nicht stoppen oder abbremsen, da er nur für das Stoppen oder Abbremsen einer nach vorne gerichteten Bewegung ausgelegt ist. Durch die Gestaltung und Positionierung des Airbagkissens (30) wird die Bewegung der Autocrashpuppe (70) jedoch abgebremst bzw. aufgefangen, wobei sowohl der Kopf und Oberkörper des Beifahrers (der linken Autocrashpuppe (70)) als auch der Kopf und Oberkörper des Fahrers (der rechten Autocrashpuppe (70)) bei dem Seitenaufprall geschützt wird. Mehr gibt's dazu nicht zu sagen.

### Bezugszeichenliste

- **10**: Airbagvorrichtung
- **20**: Gasgenerator
- **22**: Befestigungsbolzen
- **30**: Airbagkissen
- **32**: unterer Rand Airbagkissen
- **34**: Kammer
- **36**: zweite Befestigungsausnehmung
- **50**: Zugelement / Riemen
- **52**: erstes Ende Zugelement
- **54**: zweites Ende Zugelement
- **56**: Anbringungspunkt
- **58**: erste Befestigungsausnehmung
- **60**: Sitz
- **62**: Kopfstütze
- **64**: Sitzrahmen
- **66**: Bezug
- **67**: Hohlraum
- **68**: Polsterung
- **70**: Autocrashpuppe
- **80**: Karosserie
- **82**: Sicherheitsgurt
- **A**: Ansicht A-A
- **B**: Ansicht B-B
- **D**: Abstand D
- **E**: Abstand E
- **F**: Seitenkraft
- **Y**: Detail Airbagkissen

## Patentansprüche

1. Airbagvorrichtung für ein Kraftfahrzeug, die an einem Sitzrahmen (64) angeordnet und befestigt werden kann, und die ausgebildet ist, den Kopf und den Brustkorb eines Insassen im Falle eines Seitenaufpralls oder Fahrzeugüberschlags zu schützen;
mit einem innerhalb des Airbagkissens angeordneten Gasgenerator (20); mit einem Airbagkissen (30);
mit einer Befestigungsanordnung (22), wobei die Befestigungsanordnung (22), der Gasgenerator (20) und das Airbagkissen (30) miteinander verbunden sind, um die Airbagvorrichtung (10) am Sitzrahmen (64) zu befestigen;
sowie mit einem als Riemen (50) ausgebildeten Zugelement (50), das mit einem ersten Ende (52) an einem vorbestimmten Abschnitt (32) des Airbagkissens (30) angebracht ist, und mit einem zweiten Ende (54) an der Befestigungsanordnung (22) angebracht werden kann;
wobei die Befestigungsanordnung Befestigungsbolzen (22) aufweist, mittels denen die Airbagvorrichtung (10) an dem Sitzrahmen (64) angeordnet und befestigt werden kann, und wobei der Riemen (50) eine erste Befestigungsausnehmung (58) am zweiten Ende (54) aufweist, die ausgebildet ist, um an einem Befestigungsbolzen (22) angebracht zu werden,
wobei das Zugelement (50) mit dem ersten Ende (52) am unteren Rand (32) des Airbagkissens (30) angebracht ist, sodass bei Aufblasung des Airbagkissens eine nach unten gerichtete Kraft erzeugt wird, die das Airbagkissen nach unten zieht,
**dadurch gekennzeichnet, dass** sich die Befestigungsbolzen (22) vom Gasgenerator durch zweite Befestigungsausnehmungen des Airbagkissens erstrecken.

2. Airbagvorrichtung nach einem der vorangehenden Ansprüche, **dadurch gekennzeichnet, dass** die Airbagvorrichtung (10) an der Seite des Sitzrahmens (64) angeordnet ist, die zum benachbarten Sitz (60) gerichtet ist.

3. Airbagvorrichtung nach einem der vorangehenden Ansprüche, **dadurch gekennzeichnet, dass** der größte Teil des Airbagkissens (30) nach dem Auslösen der Airbagvorrichtung (10) oberhalb der Airbagvorrichtung (10) angeordnet ist.

## Claims

1. **Airbag device** for a motor vehicle, which can be arranged on and fastened to a seat frame (64) and which is designed to protect the head and chest of an occupant in the event of a side impact or vehicle rollover;
comprising a gas generator (20) arranged within the airbag cushion; comprising an airbag cushion (30);
comprising a fastening arrangement (22), the fastening arrangement (22), the gas generator (20) and the airbag cushion (30) being interconnected in order to fasten the airbag device (10) to the seat frame (64);
and comprising a tension element (50) in form of a belt (50), a first end (52) of which is attached to a predetermined portion (32) of the airbag cushion (30), and the second end (54) of which can be attached to the fastening arrangement (22);
wherein the fastening arrangement (22) has fastening bolts (22), by means of which the airbag device (10) can be arranged on and fastened to the seat frame (64), and wherein the belt (50) has a first fastening recess (58) at the second end (54), which recess is designed to be attached to a fastening bolt (22),
wherein the first end (52) of the tension element (50) is attached to the lower edge (32) of the airbag cushion (30), such that when the airbag cushion is inflated, a downward force is generated that pulls the airbag cushion downwards,
**characterized in that** the fastening bolts (22) extend from the gas generator through second fastening recesses (36) of the airbag cushion.

2. Airbag device according to any of the preceding claims, **characterized in that** the airbag device (10) is arranged on the side of the seat frame (64) that is directed towards the adjacent seat (60).

3. Airbag device according to any of the preceding claims, **characterized in that** the majority of the airbag cushion (30) is arranged above the airbag device (10) after the airbag device (10) is triggered.

## Revendications

1. **Système de coussin gonfiable de sécurité** pour véhicule á moteur, qui peut être disposé sur un cadre da siège (64) et fixé à celui-ci, et qui est conçu pour protéger la tête et la poitrine d'un passager en cas de choc latéral ou de tonneau effectué par un véhicule; comportant
un gonfleur (20) disposé dans le coussin gonflable;
un coussin gonflable (30);
un dispositif de fixation (22), le dispositif de fixation (22), le gontleur (20) et le coussin gonflable (30) étant reliés entre eux pour fixer le système de coussin gonflabie de sécurité (10) au cadre de siège (64); et
un élément de traction (50) réalisé sous forme de ceinture (50) monté sur une partie prédéterminée (32) du coussin gonftable (30) à une première extrémité (52), et pouvant être monté sur le dispositif de fixation (22) à une seconde extrémité (54);
dans lequel le dispositif de fixation comporte des boulons de fixation (22), au moyen desquels le système de coussin gonflable de sécurité (10) peut être disposé sur le cadre da siège (64) et fixé à celui-ci, et dans lequel la ceinture (50) présentant un premier évidement de fixation (58) à la seconde extrémité (54), ledit évidement étant conçu pour être monté sur un boulon de fixation (22)
dan lequel l'élément da traction (50) est monté avec la première extrémité (52) au bord inférieur (32) du coussin gonflable (30), de sorte que lorsque le coussin d'airbag est gonflé, une force dirigée vers le bas est générée, qui tire le coussin d'airbag vers le bas,
**caractérisé en ce que**
les boulons de fixation (22) s'étendent depuis le gonfleur à travers des deuxièmes évidements de fixation du coussin gonflable.

2. Système de coussin gonflable de sécurité selon l'une quelconque des revendications précédentes, **caractérisé en ce que** le système de coussin gonflable de sécurité (10) est disposé sur le côté du cadre du cadre de siège (64), qui est dirigé vers le siège adjacent (60).

3. Système de coussin gonflable de sécurité selon l'une quelconque des revendications précédentes, **caractérisé en ce que** la majeure partie du coussin gonflable (30) est disposé, après le déclenchement du système de coussin gonflable de sécurité (10), au-dessus du système de coussin gonflable de sécurité (10).
